(19) Europäisches Patentamt
European Patent Office
Office européen des brevets

(11) **EP 2 815 249 B1**

(12) **EUROPEAN PATENT SPECIFICATION**

(45) Date of publication and mention
of the grant of the patent:
**24.05.2017 Bulletin 2017/21**

(51) Int Cl.:
**G01S 5/14** *(2006.01)*       **G01S 11/06** *(2006.01)*
**H04B 5/00** *(2006.01)*

(21) Application number: **13713538.0**

(22) Date of filing: **14.02.2013**

(86) International application number:
**PCT/IB2013/051194**

(87) International publication number:
**WO 2013/121369 (22.08.2013 Gazette 2013/34)**

(54) **METHOD AND APPARATUS FOR ESTIMATING A DISTANCE AND A LOCATION THROUGH NEAR-FIELD MULTI-FREQUENCY RADIO TRANSMISSIONS**

VERFAHREN UND VORRICHTUNG ZUR SCHÄTZUNG EINER ENTFERNUNG UND ORTSBESTIMMUNG DURCH MULTIFREQUENTE NAHFELD-FUNKÜBERTRAGUNG

PROCÉDÉ ET APPAREIL D'ESTIMATION DE DISTANCE ET D'EMPLACEMENT AU MOYEN DE TRANSMISSIONS RADIO MULTIFRÉQUENCE EN CHAMP PROCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.02.2012 IT MO20120038**

(43) Date of publication of application:
**24.12.2014 Bulletin 2014/52**

(73) Proprietor: **Alma Mater Studiorum -Università di Bologna**
**40126 Bologna (IT)**

(72) Inventors:
• **DARDARI, Davide**
**I-47039 Savignano sul Rubicone (Forlì Cesena) (IT)**
• **DECARLI, Nicolò**
**I-47039 Savignano sul Rubicone (Forlì Cesena) (IT)**

(74) Representative: **Crugnola, Pietro et al**
**Luppi Crugnola & Partners S.r.l.**
**Viale Corassori 54**
**41124 Modena (IT)**

(56) References cited:
**GB-A- 2 428 342**       **US-A1- 2007 040 545**
**US-A1- 2007 133 598**   **US-B2- 7 228 228**

**Description**

The invention concerns a system for measuring the distance between two radio devices, where the first device emits a proper bi-tonal radio signal that is received by the second device that is able to estimate the distance from the first device. Combining multiple devices allows the system to estimate the position of a device with respect to a set of devices located in known positions. The present invention also concerns a method for estimating the position of a radio device even in the absence of information on the orientation of the device to locate.

The present invention is part of high precision real-time locating systems (RTLS) able to locate and track the position of one or more devices (target) also in indoor environments where the GPS is not available.

The availability of position information in real time and in indoor environments paves the way towards the development of advanced applications for logistics, security, medicine (monitoring of patients), and rescue, to give some examples.

RTLS systems are composed of a fixed infrastructure formed by fixed reference radio devices, suitably interconnected with each other, called anchor nodes, and one or more mobile radio devices, called targets, to be localized. Typically RTLS systems determine the position of a target by extrapolating from the radio signals exchanged between the anchor and target devices the parameters related to target position. Starting from the measurement of these parameters, the target position is estimated by means of geometric triangulation or multilateration techniques, with an error depending on the uncertainty of the measures.

The principal parameters measured in modem localization systems are the strength of the received signal (RSS), the signal time-of-arrival (TOA), the signal angle-of-arrival (AOA), or combinations of them.

Localization systems based on the RSS measurement, while cheap and simple, generally offer poor performance in terms of localization accuracy due to the weak correlation existing between the position / distance of the target and the level of received power, especially in indoor environments and in the presence of obstacles and non-line-of-sigh (NLOS) propagation conditions. These systems do not present particular implementation issues and may be based on standard wireless radio on the market (e.g., RFID, Wi-Fi, Zigbee).

A better accuracy can be obtained by means of techniques based on the estimation of the signal propagation delay (time of arrival, TOA) provided that very large bandwidth signals or even ultra-wideband (UWB) signals are employed in order to increase the time resolution obtainable. In this case, in favorable propagation conditions, accuracies below one meter are feasible. In order to reduce the cost of the target device, leading commercial systems based on UWB technology exploit the measurements of the time-difference-of-arrival (TDOA) of the signal transmitted from the target to the anchor nodes. However, this method requires anchor nodes synchronized with very high precision (typically <1ns) with consequent increasing in the complexity and cost of the infrastructure.

With the large diffusion of OFDM (orthogonal frequency division multiplexing) transmission techniques that allow achieving significant bandwidths with a low level of complexity, TOA estimation based on multi-carrier signals raised of interest.

Other localization techniques are based on the estimation of the angle of arrival (AOA) of the signals received by the device. For this purpose, the anchor nodes have to be equipped with multiple antennas (antenna arrays) with a consequent increasing of the costs.

All the above-mentioned technologies adopt microwave radio transmissions with frequencies higher than 1GHz which, as it is well known, are characterized by a low level of penetration of obstacles. Furthermore, the presence of multiple reflections of the radio signal in the environment produces degradation in the estimate of the TOA or AOA with errors that can exceed one meter, making useless the adoption of large bandwidths. Although the performances are potentially very high in line-of sight conditions (LOS), in complex scenarios consisting of multiple environments and obstacles (NLOS) microwave-based techniques present coverage difficulties that may be overcome only by the deployment of a large number of anchor nodes, making prohibitive in many cases the adoption in several application scenarios (e.g., a shopping mole). In addition, it is to be noticed that UWB technology is still very expensive. Finally some of the techniques mentioned above require a bidirectional transmission between the nodes with a further increase in complexity.

An interesting alternative to microwave-based localization techniques is represented by the near-field electromagnetic ranging (NFER) technique described in the US patent 6,963,301.

The goal of this technique is the distance estimation (ranging) between a transmitting device TX and a receiving device RX. The transmitting device TX sends a sinusoidal signal at very low frequency so that the system operating area is included in the so-called near-field propagation area. This requires the adoption of a carrier frequency related to a wavelength significantly higher than the maximum operating distance between anchor nodes and target. As an example, if this distance is around 70-100 meters, the wavelength must be at least 300 meters, corresponding to a carrier frequency of 1 MHz.

The receiving device RX is equipped with two antennas, ideally a magnetic and an electric dipole, able of providing two sinusoidal signals at their output with amplitudes proportional to the intensity of the received magnetic and electric fields. It is possible to show that, in near-field propagation conditions, the phase difference between the two signals is function of the distance between TX and RX, and it is also independent on the initial phase of the transmitted signal, which is unknown at the receiving device in absence of synchronization between the devices. The adoption of low-frequency signals for localization ensures some advantages with respect to microwave-based systems, such as high obstacle penetration and fewer problems in multipath propagation.

In "Chee Wee Kim, F. P. S. Chin, and H. K. Garg, Selection of Frequency for Near Field Electromagnetic Ranging (NFER) Based on its Cramer-Rao Bound, IEEE SIGNAL PROCESSING LETTERS, VOL. 14, NO. 12, DECEMBER 2007" the theoretical limits of this technique are analyzed, while in "C.W. Kim, F.P.S. Chin and H.K. Garg, Multiple Frequencies For Accuracy Improvement In Near Field Electromagnetic Ranging (NFER), The 17th Annual IEEE International Symposium on Personal, Indoor and Mobile Radio Communications", the possibility of replicate the same procedure in parallel at different frequencies is investigated for improving the system reliability on distance estimation. Experimental results demonstrate how it is possible to achieve distance estimations with an accuracy <1-2 meters up to 60-70 meters in presence of walls and other obstacles. This ensures easy coverage with a limited number of anchor nodes. Moreover, the development of low-frequency systems requires very economical and low-cost electronic technologies. Therefore a primary advantage of the NFER technology is related to the simplification of the infrastructure because less anchor nodes are required and time synchronization of the nodes is not needed.

In US 2009/0280742 the technique proposed in US 6,963,301 has been extended adopting multiple antennas driven by sinusoidal signals at the same frequency properly phased and calibrated to compensate the variations deriving from different spatial orientations of the target. The same principle is adopted to decode information associated to the phases, if any.

A similar approach is adopted in US 7,307,595, where two magnetic dipoles are driven in quadrature in order to obtain an omnidirectional overall radiation pattern on the plane of interest, so that the distance estimation process is less affected by different orientations of the target device.

Based on the same principle of US 6,963,301, US patents 7,298,314, US 7,592,949 and US 7,859,452 propose calibration techniques of the localization system able of improving the precision in real scenarios.

US 7,414,571 and US 7,957,833 describe possible applications of the techniques proposed in US 6,963,301 and US 7,307,595 in RTLS systems addressed to applications such as tracking of containers and pallets.

In US 7304609 the NFER technique proposed in US 6,963,301 is combined with a time of arrival estimation technique based on UWB signals in order to realize a ranging hybrid system able of exploiting the features of both technologies to improve the final accuracy of distance estimation.

US 7228228 discloses a tracking system in which a mobile tag having an unknown position, which tag is to be tracked in space over time, transmits a signal comprising a pair of tones at different frequencies. The transmitted signal is received at each of three receivers, each having a known location, where the phase of each of the tones within the signal is measured. The measured phases are passed to a processing unit which determines the position of the tag at the time of transmission of the signal on the basis of the difference between the measured phases of the two tones. The tracking system operates over a defined finite range to track the position of the mobile tag uniquely in space.

The disadvantages of the NFER technique rely mainly on the necessity of using antennas with not negligible size due to the adopted wavelengths, especially as far as the realization of the electrical dipole, and an unavoidable low energy efficiency which implies high battery consumption are concerned.

In the context of localization technologies based on near-field transmission, or in general at very low frequencies (<1MHz), there are to be mentioned localization systems addressed to the localization of rescue signaling devices, such as systems signaling avalanche victims, the so-called avalanche beacons. However, the performance and the purpose of such systems are quite different from the RTLS object of this invention.

The purpose of this invention is providing a short-range radio localization system operating in near-field propagation range able of estimating with high precision the distance between a transmitting device and a receiving device, the system being further able to estimate the position of a transmitting device with respect to multiple receiving devices placed in known positions. This purpose is achieved with a distance estimation system (ranging) according to claim 1, with a distance estimating system according to claims 10 and 11 and with a localization system according to claim 12.

According to the invention a transmitting device emits two phased (synchronized) sinusoidal signals characterized by two different frequencies. The frequencies are chosen in the medium waves spectrum band (around 1 MHz) in order to include the system operating area in the near-field propagation range (e.g., 1MHz if we want to achieve operative ranges of about 70-100 meters). The transmission can be operated by an electrical dipole of a magnetic dipole. The adoption of a magnetic dipole realized with a loopstick ferrite antenna is in general preferable for achieving higher antenna efficiency with a smaller size of the antenna.

The receiving device is equipped with an antenna, ideally a magnetic dipole if, in transmission, a magnetic dipole is adopted, or an electric dipole if, in transmission, an electric dipole is adopted. The sinusoidal components at the two different frequencies of the received signal are separated with two high-selective band-pass filters and their phases are estimated synchronously. The phase differences at the two different frequencies, when properly combined, are function of the distance between the transmitting device and the receiving device, regardless the initial phase of the transmitted sinusoidal signals, which is usually unknown at the receiving device.

The estimation of distance between the transmitting device and the receiving device based on the phase difference of the magnetic or electric field, of a received signal at two different frequencies allows avoiding the adoption in the receiving device of two different types of antenna (magnetic and electric dipoles) and adopting one type only (only electrical dipole or only magnetic dipole). In this manner a higher flexibility on antenna choice, the possibility of obtaining more efficient and smaller devices (e.g., by adopting ferrite antennas only) and less difficulties in installation and calibration of the devices are ensured.

A further advantage of this invention is related to the possibility of estimating with accuracy the distance between a transmitting device and a receiving device when orientation of the transmitting device with respect to the receiving device is not known beforehand. In fact, the uncertainty on the orientation of the transmitting device with respect to the receiving device can make ambiguous the connection between distance and signal phases at the two operating frequencies, compromising the estimation of distance between the transmitting device and the receiving device. Differently, thanks to the present invention, it is possible to estimate with high accuracy the distance between a transmitting device and a receiving device also when the orientation of the transmitting device with respect to the receiving device is not known. This can be obtained by considering the orientation of the target device as an unknown quantity to be estimated jointly with its position, as it will be described in detail here below.

The invention is described here below with reference to the attached drawings illustrating non-limiting examples of embodiments:

Figure 1 is a basic scheme of a system for distance estimation according to the invention;
Figure 2 shows an example of the geometric configuration between the transmitting antenna and the receiving antenna; Figure 3 is a plot of a function adopted for estimating distance between the transmitting device and the receiving device;
Figure 4 is a basic scheme of a variation of a system for distance estimation according to the invention;
Figure 5 is a basic scheme of a further variation of a system for distance estimation according to the invention;
Figure 6 shows an example of an application of the technique for distance estimation of the present invention in the context of a localization system where a multiplicity of receiving devices and at least a transmitting device are present.

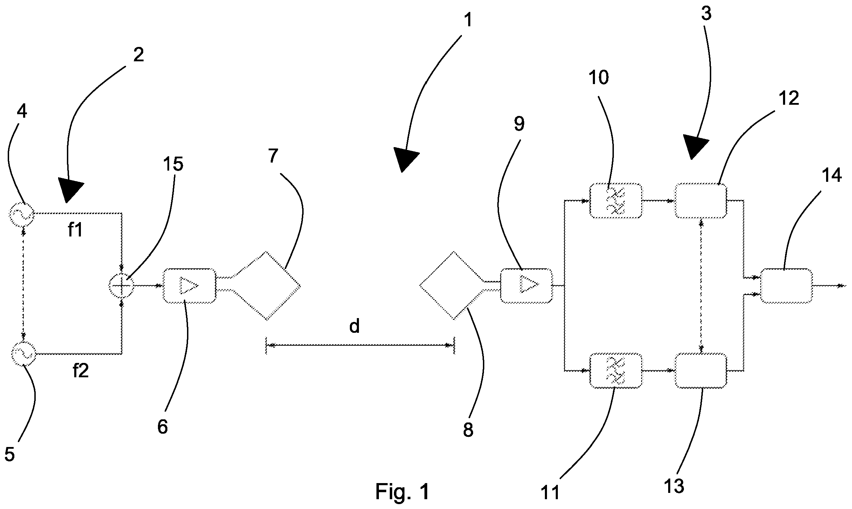

With reference to Figure 1, a system 1 according to the invention comprises a transmitting device 2 and a receiving device 3. The transmitting device 2 comprises a first sinusoidal oscillator 4 and a second sinusoidal oscillator 5, in phase (synchronized), working, respectively, at frequency f1 and f2. The first sinusoidal oscillator 4 generates a first sinusoidal signal $s_1(t)$ with frequency f1 and the second sinusoidal oscillator 5 generates a second sinusoidal signal $s_2(t)$ with frequency f2 different from f1. As an alternative, the transmitting device 2 may comprise a single sinusoidal generator working at frequency f1 and a frequency divider/multiplier to generate a second sinusoidal signal at a second frequency f2, which is a submultiple or a multiple of f1. As example, if f2=fl/2, a divider by 2 is sufficient.

The two generated sinusoidal signals, $s_1(t)$ e $s_2(t)$, can be expressed as:

$$s_1(t) = V_0 \cos(2\pi f_1(t + t_0))$$

$$s_2(t) = V_0 \cos(2\pi f_2(t + t_0))$$

where $t_0$ is the time offset of the transmitting device 2 with respect to the receiving device 3.

Supposing, realistically, that the transmitting device 2 and the receiving device 3 are not synchronized, this time offset must be considered as unknown.

The two sinusoidal signals are then combined with a summing device 15 so that a combined signal s(t) is obtained, which is given by:

$$s(t) = s_1(t) + s_2(t) = V_0 \cos(2\pi f_1(t + t_0)) + V_0 \cos(2\pi f_2(t + t_0))$$

The combined signal s(t) is then amplified with an amplifier 6 and forwarded to a transmitting antenna 7.

The transmitting antenna 7 can be realized with a magnetic dipole of with an electric dipole. The adoption of a magnetic dipole, such as a ferrite loopstick antenna, is generally preferable to obtain higher efficiency with a smaller size.

At distance d from the transmitting device 2 there is the receiving device 3 comprising a receiving antenna 8, which receives the signal emitted by the transmitting antenna 7 of the transmitting device 2. The receiving antenna 8 is of the same type of the transmitting antenna 7, that is an electric dipole if the transmitting antenna 7 is an electric dipole, or a magnetic dipole if the transmitting antenna 7 is a magnetic dipole.

The signal received by the receiving antenna 8 is amplified with an amplifier 9, for example, a low noise amplifier.

The signal v(t) amplified by the amplifier 9 can be expressed as:

$$v(t) = V_{r1}(d)\cos(2\pi f_1(t+t_0) + \varphi_1(d)) + V_{r2}(d)\cos(2\pi f_2(t+t_0) + \varphi_2(d)) + n(t)$$

where $\varphi_1(d), \varphi_2(d), V_{r1}(d), V_{r2}(d)$ are, respectively, the phases and the amplitudes of the sinusoidal components of the received signal that, in near field propagation conditions, are known functions of the frequency, of the distance d between the transmitting device 2 and the receiving device 3 and of the mutual orientation $\Theta$ of the antennas of the transmitting device and the receiving device, as will be detailed here below. The term n(t) accounts for the thermal noise, that is additive white Gaussian noise (AWGN).

The sinusoidal components at the two frequencies f1 and f2, of the received signal are separated by a first band-pass filter 10 and by a second band-pass filter 11, both highly selective, at whose output a first sinusoidal signal $v_1(t)$ and a second sinusoidal signal $v_2(t)$ are obtained:

$$v_1(t) = V_{r1}(d)\cos(2\pi f_1(t+t_0) + \varphi_1(d)) + n_1(t)$$

$$v_2(t) = V_{r2}(d)\cos(2\pi f_2(t+t_0) + \varphi_2(d)) + n_2(t)$$

The terms $n_1(t)$ and $n_2(t)$ denote the residual thermal noise components after filtering. The higher is the filter selectivity, the lower will be the residual noise intensity.

These sinusoidal signals are sent to a first phase estimator 12 and to a second phase estimator 13, synchronized with each other, which estimates the phases of the two filtered sinusoidal signals $v_1(t)$ and $v_2(t)$ with respect to the local time reference of the receiving device 3 that, in general, will present an offset to with respect to the transmitting device.

Therefore at the phase estimator outputs we have the following estimates:

$$\phi_1(d, t_0) = 2\pi f_1 t_0 + \varphi_1(d) + w_1(t)$$

$$\phi_2(d, t_0) = 2\pi f_2 t_0 + \varphi_2(d) + w_2(t)$$

where $W_1(t)$ and $W_2(t)$ represent the phase noise caused by the presence of the noise terms $n_1(t)$ and $n_2(t)$, respectively.

The two phase estimates are applied to the input of a processing device 14 that evaluates the following quantity:

$$\hat{\psi}(d) = \phi_2(d, t_0) - \frac{f_2}{f_1}\phi_1(d, t_0) = \psi(d) + w(t) \qquad (1)$$

where

$$\psi(d) = \varphi_2(d) - \frac{f_2}{f_1}\varphi_1(d) \qquad (2)$$

and

$$w(t) = w_2(t) - \frac{f_2}{f_1} w_1(t)$$

Except for the noise term w(t) that can be reduced by increasing the selectivity of filters 10 and 11 and/or increasing the transmitting power, the estimator produces an estimate of the term $\psi(d)$ that, as can be seen, is not function of the time offset to but of the distance d only. Given the frequencies f1 and f2, the deterministic function $\psi(d)$, and the measured values $\Phi_1$ and $\Phi_2$, it is possible to obtain an estimate of d using (1).

In general (2) is function, not only of the distance d, but also of the antennas orientation $\Theta$, so, strictly speaking, $\psi(d) = \psi(d,\Theta)$.

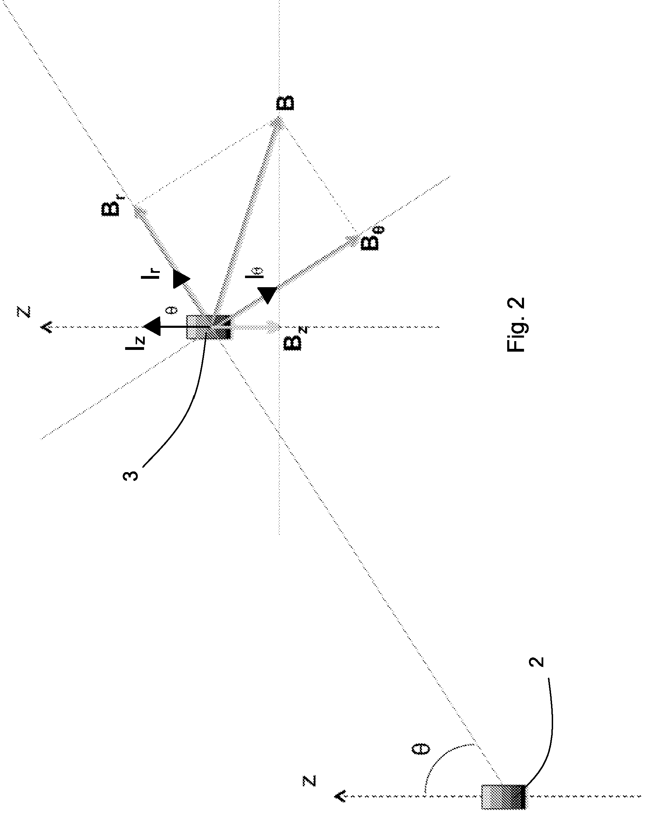

In Figure 2 an example of the geometric configuration between the transmitting antenna 7 of the transmitting device 2 and the receiving antenna 8 of the receiving device 3 is illustrated.

With reference to the orientations of the antennas 7 and 8 (magnetic dipoles) considered in Figure 2, with a receiving device 3 seen under angle $\Theta$ with respect to the azimuth of the transmitting device 2, the magnetic field vector $\bar{B}$ at the receiving antenna results:

$$\bar{B} \propto \exp\{-jkd\} \left[ \left( -\frac{1}{kd} + \frac{j}{(kd)^2} + \frac{1}{(kd)^3} \right) sen\,\Theta\, \hat{i}_\Theta + 2 \left( \frac{j}{(kd)^2} + \frac{1}{(kd)^3} \right) \cos\Theta\, \hat{i}_r \right]$$

where k=$2\pi$ f/c, c is the speed of light and $\hat{i}_r, \hat{i}_\Theta$ the unit vectors, respectively, of the radial direction and of its perpendicular, as can be seen from Figure 2.

Since the field component along the direction z (i.e., the direction of the receiving antenna 8) is the one determining the voltage induced on the receiving device, the general expression of the term $\varphi(d,\Theta) = \arg(B \cdot \hat{i}_z)$ results:

$$\varphi(d,\Theta) = -\frac{2\pi fd}{c} + arctg\frac{(sen^2\Theta - 2\cos^2\Theta)2\pi fd/c}{\left( \left(1 - (2\pi fd/c)^2\right) sen^2\Theta - 2\cos^2\Theta \right)} \tag{2a}$$

where $\hat{i}_z$ is the unit vector along the direction z shown in Figure 2. When computing $\psi(d,\Theta)$ according to equation (2), the additive term -2$\pi$fd/c being weighted by the ratio $f_2 / f_1$ is canceled obtaining a simple difference of arctangents.

As example, in case of transmitting and receiving antennas composed by magnetic dipoles placed in radial positions, from equations (2) and (2a) we have:

$$\psi(d,\Theta = 0) = arctg\left( \frac{2\pi f_2 d}{c} \right) - \frac{f_2}{f_1} arctg\left( \frac{2\pi f_1 d}{c} \right) \tag{3}$$

where c is the speed of light, while in the case of parallel dipoles we obtain:

$$\psi(d,\Theta = \frac{\pi}{2}) = arctg\left( \frac{2\pi f_2 d/c}{1 - (2\pi f_2 d/c)^2} \right) - \frac{f_2}{f_1} arctg\left( \frac{2\pi f_1 d/c}{1 - (2\pi f_1 d/c)^2} \right).$$

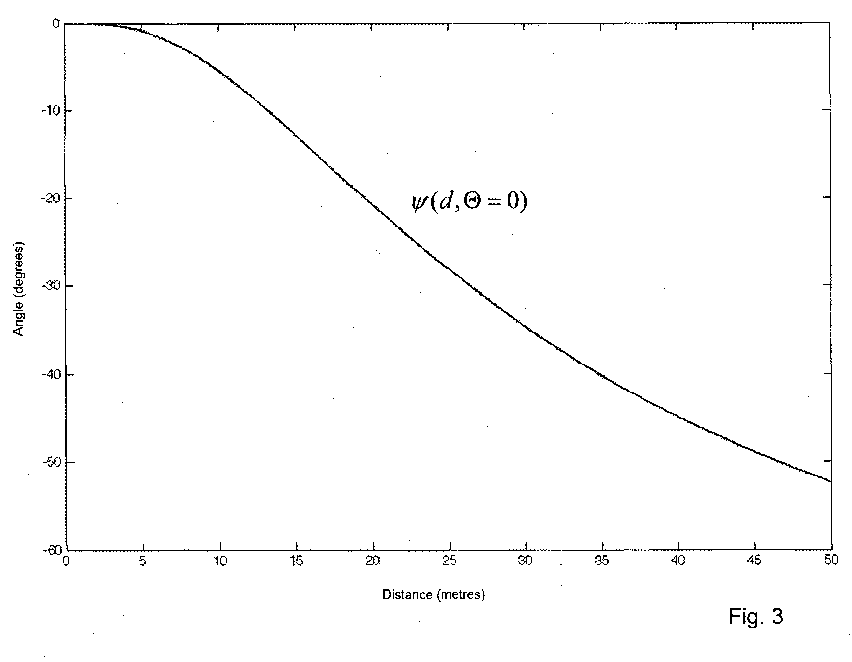

In figure 3 the behavior of $\psi(d,\Theta = 0)$ is reported as function of the distance d in case frequencies f1 and f2 of the transmitting device are, respectively, fl=2MHz and f2=4MHz. Starting from the measurements of $\Phi_1$ and $\Phi_2$ the estimator evaluates $\psi(d)$ by using (1) from which, by inverting the plot of Figure 3 (or equation 3), the estimation of d is obtained, except for the measure error.

The described procedure is valid if the mutual orientation $\Theta$ of the transmitting antenna 7 and of the receiving antenna 8 is known. This may be true in some applications where $\Theta$ is fixed, due to geometric constraints, or in the case the transmitting device 2 is equipped with inertial devices able of determining the orientation of the transmitting device 2. If the orientation is not known, the function $\psi(d,\Theta)$ is not uniquely determined. This uncertainty can be solved during the localization process as will be explained here below. With reference to the basic scheme of Figure 1 different equivalent embodiments are possible.

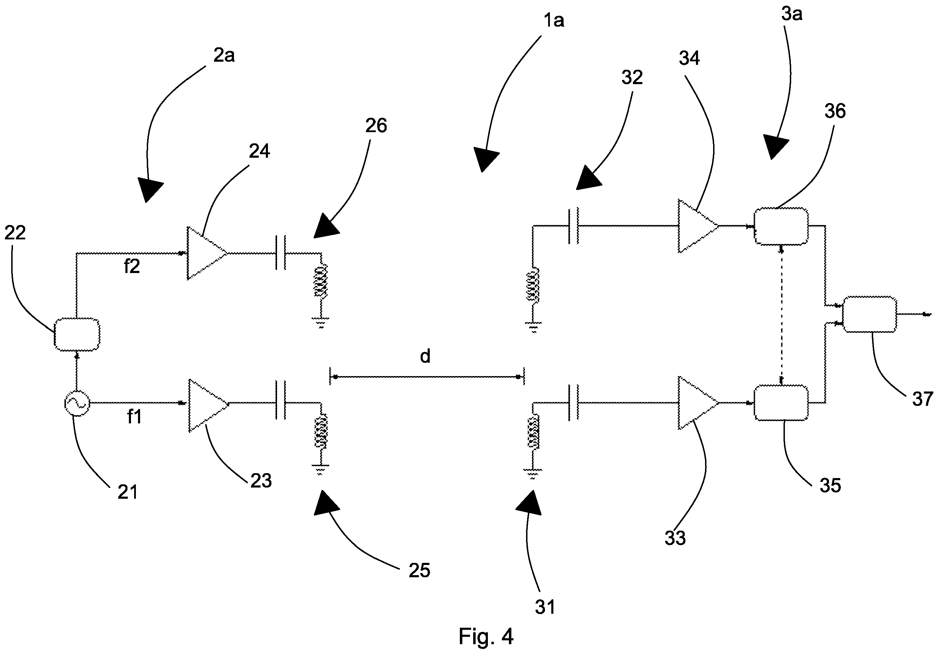

In Figure 4 a variation 1a of a system according to the invention is illustrated. In this variation, we have a transmitting device 2a and a receiving device 3a. The transmitting device 2a comprises a sinusoidal oscillator 21 generating a first sinusoidal signal f1, a frequency divider, or a multiplier, 22, connected to the sinusoidal oscillator 21, generating a second sinusoidal signal at frequency f2 which is a submultiple, or a multiple, of the frequency f1, a first amplifier 23 amplifying the signal at frequency f1, a second amplifier 24 amplifying the second signal at frequency f2, a first resonant LC circuit 25, with high Q factor, operating at frequency f1, for the transmission of the first sinusoidal signal and a second resonant LC circuit 26, with high Q factor, operating at frequency f2, for the transmission of the second sinusoidal signal.

The receiving device 3a is realized with a third resonant LC circuit 31, with high Q factor, operating at frequency f1, for the reception of the first sinusoidal signal and a fourth resonant LC circuit 32, with high Q factor, operating at frequency f2, for the reception of the second sinusoidal signal. The receiving device 3a further comprises a first low noise amplifier 33 for the amplification of the received signal at frequency f1 and a second low noise amplifier 34 for the amplification of the received signal at frequency f2. The amplified signal of the first amplifier 33 is sent to a first phase estimator 35 estimating the phase of the signal at frequency f1 and the signal amplified by the second amplifier 34 is sent to a second phase estimator 36 estimating the phase of the signal at frequency f2. The phase estimates provided by the phase estimators 35 e 36 are sent to a processing device 37 estimating the distance d of the transmitting device 2a with respect to the receiving device 3a according to the previous described procedure. The adoption of the resonant circuits 25, 26, 31, 32 allows the achievement of a higher energy efficiency and frequency selectivity, both in transmission and in reception.

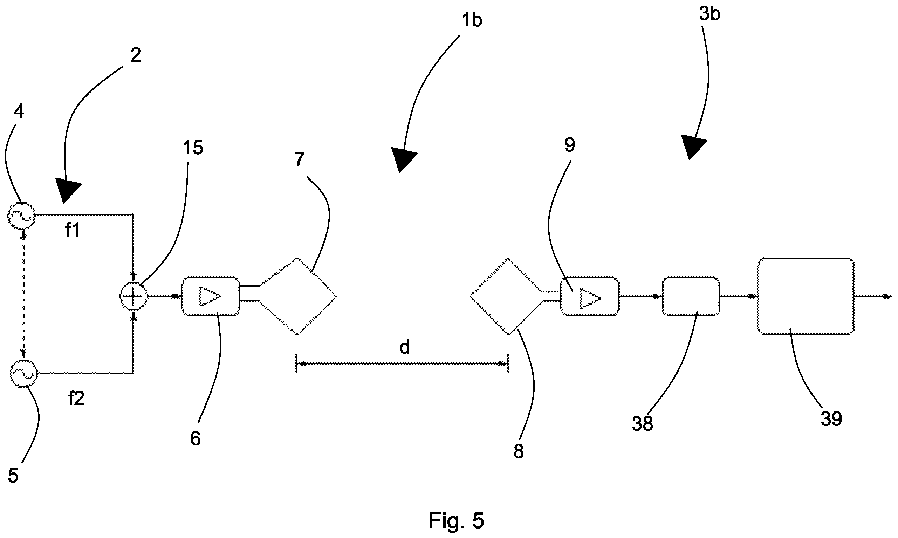

In figure 5 a further variation 1b of the system according to the invention is illustrated.

In this variation 1b, the transmitting device 2 is equal to the transmitting device of Figure 1. The receiving device 3b comprises a receiving antenna 8, of the same type of the transmitting antenna 7 of the transmitting device 2, a low noise amplifier 9, amplifying the signal received by the receiving antenna 8, an analog to digital converter 38, converting to digital form the signal amplified by the amplifier 9, and a digital signal processing device 39, that can be constituted by a digital signal processor (DSP) or a field programmable gate array (FPGA), and realizes the signal filtering operations, the phase estimate and the distance estimate of the transmitting device 2 with respect to the receiving device 3b.

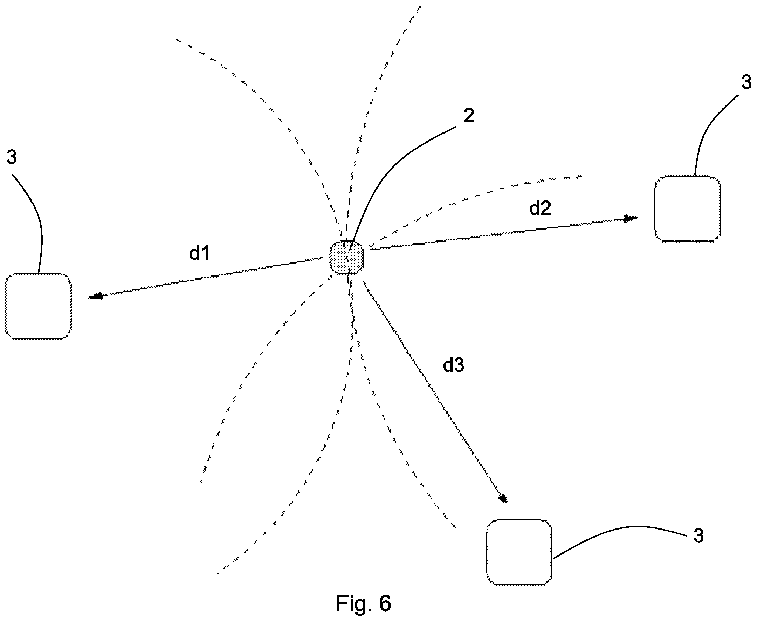

The adoption of the digital processor or field programmable gate array in the receiving device 3b allows realizing a system less subject to the tolerances of the electronic components and with less tuning problems, as well as greater flexibility of configuration. Figure 6 shows an application example of the distance estimation technique object of this invention in a localization system, which allows determining the position of a transmitting device 2.

The system uses several receiving devices 3, at least three, called also anchor nodes, placed in different but known positions. The signal transmitted by the transmitting device 2, called also target node, is received by the three receiving devices 3, each producing an estimate of the respective distance d1, d2, d3, from the transmitting device 2, according to the previous described method. Subsequently, starting from the three distance estimates, adopting classical multilateration algorithms, the infrastructure composed of the three receiving devices 3 can estimate the position of the transmitting device 2. When the position estimation of multiple transmitting device devices 2 is required, it is sufficient to associate to each transmitting device 2 a pair of frequencies non-overlapping the frequencies used by the other devices transmitting devices 2. The advantage of this scheme consists in the simplicity of target nodes, while the overall computational overhead is charged to the infrastructure composed of anchor nodes.

A complementary scheme, equivalent from the performance point of view, requires the anchor nodes equipped with transmitting devices 2 each working at a distinct pair of frequencies, and a target equipped with a multiple receiving devices 3 tuned on each couple of frequencies of the anchor nodes. In this case the estimate of the distance from the anchor nodes, and then of the position is made directly by the target node. The main advantage of this solution consists in scalability because the dimensioning of the system (number of frequencies occupied) is independent of the number of target nodes present in the area, at the expense of a greater complexity of the target device.

If the function necessary for estimating the distances of the target from anchor nodes shows uncertainty due to the lack of knowledge of the orientation $\Theta$ of the target with respect to the reference system, the position of the target node cannot be estimated with conventional approaches. To obviate this drawback it is possible to add one or more anchor nodes at known locations with the aim of increasing the number of constraints to the problem of estimating the position and treat orientation $\Theta$ as an unknown quantity to be estimated jointly with the position. The result is the ability at estimating correctly both the position of the target as well as its orientation.

A possible approach, which can be adopted in both the localization schemes above described, is represented by the least square (LS) technique, applied to this problem. Specifically, given $N_A$ anchor nodes placed in known positions $p_i$, the target node position estimation p and its orientation $\Theta$ are obtained by solving the following expression:

$$\left\{\hat{p},\hat{\Theta}\right\} = \arg\min_{\{p,\Theta\}} \sum_{i=1}^{N_A} \left(\hat{\psi}_i - \psi\left(\|p - p_i\|, O_i\left(p,\Theta\right)\right)\right)^2 \quad (4)$$

where the function $O_i(p,\Theta)$ returns the relative orientation of the target with respect to the i-th anchor node, which can be obtained by purely geometrical considerations given $p_i$, p and $\Theta$.

The parameter $\hat{\psi}_i$ represents the term estimated through (1) related to the link between the target and the i-th anchor node, while $\psi(d,\Theta)$ is given by (2).

**Claims**

1. Method for estimating a distance (d) of a transmitting device (2; 2a) from at least one receiving device (3; 3a; 3b) comprising the following steps:

   - generating with said transmitting device (2; 2a) a first sinusoidal signal having a first frequency f1;
   - generating with said transmitting device (2; 2a) a second sinusoidal signal having a second frequency f2, that is synchronous with said first sinusoidal signal;
   - transmitting said first sinusoidal signal and said second sinusoidal signal to said at least one receiving device (3, 3a, 3b);
   - estimating the phase of said first sinusoidal signal and of said second sinusoidal signal received from said receiving device (3; 3a; 3b);
   - estimating said distance (d) on the basis of said estimate of the phase of said first sinusoidal signal and of said second sinusoidal signal,

   **characterized in that** said first frequency f1 and said second frequency f2 are chosen in such a manner that said transmitting device and said at least one receiving device operate in the near-field propagation zone.

2. Method according to claim 1, wherein said second frequency f2 is a multiple or a submultiple of said first frequency f1, or where the two signals are synchronous each other.

3. Method according to claim 1 or 2, wherein said first sinusoidal signal and said second sinusoidal signal are summed together in such a manner as to obtain a combined signal that is transmitted to said receiving device (3; 3a; 3b), said combined signal received from said receiving device (3; 3a; 3b) being optionally converted into digital form.

4. Method according to claim 3, wherein, before estimating said phase, said combined signal received from said receiving device (3; 3a; 3b) is filtered to separate said first sinusoidal signal and said second sinusoidal signal and reduce the intensity of the residual thermal noise.
   Amended claims_reply 1^ OA_clean copy.docx

5. Method according to any preceding claim, wherein said at least one receiving device (3; 3a; 3b) comprises a plurality of receiving devices (3; 3a; 3b) arranged in different and known positions.

6. Method according to claim 5, wherein said estimating said distance comprises estimating the respective distances (d1; d2; d3) of said transmitting device (2; 2a; 2b) from said receiving devices (3; 3a; 3b).

7. Method according to claim 6, further comprising estimating the position of said transmitting device (2) with respect to said receiving devices (3; 3a; 3b) on the basis of said respective distances (d1; d2; d3).

8. Method according to any one of claims 5 to 7, wherein said plurality of receiving devices (3; 3a; 3b) comprises at least three receiving devices (3; 3a; 3b), or a number of receiving devices (3; 3a; 3b) greater than three.

9. Method according to claim 8, further comprising estimating the position and orientation of said transmitting device (2; 2a) with respect to said receiving devices (3; 3a; 3b) on the basis of the respective phase measurements of the two sinusoidal signals originating from said transmitting device (2; 2a) from said receiving devices (3; 3a; 3b) and to the positions of said receiving devices (3; 3a; 3b).

10. Distance estimating system comprising a transmitting device (2) and at least one receiving device (3), said system being adapted to estimate a distance (d) of said transmitting device (2) from said at least one receiving device (3), wherein said transmitting device (2) comprises:

- a first sinusoidal oscillator (4) that is adapted to generate a first sinusoidal signal having a first frequency f1;
- a second sinusoidal oscillator (5) that is adapted to generate a second sinusoidal signal, that is synchronous with said first sinusoidal signal, having a second frequency f2;
- a summing device (15) that is adapted to sum said first sinusoidal signal and said second sinusoidal signal to obtain a combined signal that is the sum of said first sinusoidal signal and of said second sinusoidal signal;
- an amplifier (6) that is adapted to amplify said combined signal; Amended claims_reply 1^ OA_clean copy.docx
- a transmitting antenna (7) that is adapted to transmit said combined amplified signal,

wherein said receiving device comprises:

- a receiving antenna (8) that is adapted to receive said combined amplified signal transmitted by said transmitting antenna (7);
- a low noise amplifier (9) that is adapted to amplify the signal received by said receiving antenna (8);

**characterized in that** said receiving device further comprises:

- a first band-pass filter (10) that is adapted to filter a first component having a frequency f1 of said signal received by said receiving antenna (8);
- a second band-pass filter (11) that is adapted to filter a second component having a frequency f2 of said signal received by said receiving antenna (8);
- a first phase estimator (12) that is adapted to estimate a phase of said first component having a frequency f1;
- a second phase estimator (13) that is adapted to estimate a further phase of said second component having a frequency f2;
- a processing device (14) that is adapted to evaluate said distance (d) on the basis of said estimated phase and of said further estimated phase, said first frequency f1 and said second frequency f2 being chosen in such a manner that said transmitting device and said at least one receiving device operate in the near-field propagating zone.

11. Distance estimating system comprising a transmitting device (2) and at least one receiving device (3b), said system being adapted to estimate a distance (d) of said transmitting device (2) from said at least one receiving device (3b), wherein said transmitting device (2) comprises:

- a first sinusoidal oscillator (4) that is adapted to generate a first sinusoidal signal having a first frequency f1;
- a second sinusoidal oscillator (5) that is adapted to generate a second sinusoidal signal, that is synchronous with said first sinusoidal signal, having a second frequency f2;
- a summing device (15) that is adapted to sum said first sinusoidal signal and said second sinusoidal signal to obtain a combined signal that is the sum of said first sinusoidal signal and of said second sinusoidal signal;
- an amplifier (6) that is adapted to amplify said combined signal;
- a transmitting antenna (7) that is adapted to transmit said combined amplified signal,

wherein said receiving device (3b) comprises:

- a receiving antenna (8) that is adapted to receive said combined amplified signal transmitted by said transmitting antenna (7);
- a low noise amplifier (9) that is adapted to amplify the signal received by said receiving antenna (8);

**characterized in that** said receiving device further comprises:

- an analogue to digital converter (38) that is adapted to convert into a digital form said signal received by said receiving antenna (8) and amplified by said amplifier (9);

- a digital processing device (39) that is adapted to process said signal received by said receiving antenna (8) and amplified by said amplifier (9) realizing the signal filtering operations, the phase estimate and the distance estimate of the transmitting device (2) with respect to the receiving device (3b),

said first frequency f1 and said second frequency f2 being chosen in such a manner that said transmitting device and said at least one receiving device operate in the near-field propagating zone.

12. Localisation system comprising a transmitting device (2a) and at least one receiving device (3a), said system being adapted to estimate a distance (d) of said transmitting device (2a) from said at least one receiving device (3a), **characterised in that** said transmitting device (2a) comprises:

- a sinusoidal oscillator (21) that is adapted to generate a first sinusoidal signal having a frequency f1;
- a frequency divider or multiplier (22), connected to said sinusoidal oscillator (21) and that is adapted to generate a second sinusoidal signal having a frequency f2 equal to a submultiple, or to a multiple, of said frequency f1;
- a first amplifier (23) that is adapted to amplify said first sinusoidal signal having a frequency f1;
- a second amplifier (24) that is adapted to amplify said second sinusoidal signal having a frequency f2;
- a first resonant circuit (25) LC that operates at said first frequency f1, that is adapted to transmit said first sinusoidal signal;
- a second resonant circuit (26) LC that operates at said second frequency f2, that is adapted to transmit said second sinusoidal signal, **characterized in that** said first frequency f1 and said second frequency f2 are chosen in such a manner that said transmitting device and said at least one receiving device operate in the near-field propagating zone, and **in that** said receiving device (3a) comprises:

- a third resonant circuit (31) LC that operates at said first frequency f1, that is adapted to receive said first sinusoidal signal;
- a fourth resonant circuit (32) LC that operates at said second frequency f2, that is adapted to receive said second sinusoidal signal;
- a first low-noise amplifier (33) adapted to amplify said first sinusoidal signal;
- a second low-noise amplifier (34) adapted to amplify said second sinusoidal signal;
- a first phase estimator (35) that is adapted to estimate a phase of said first sinusoidal signal;
- a second phase estimator (36) that is adapted to estimate a further phase of said second sinusoidal signal;
- a processing device (37) that is adapted to estimate said distance (d) on the basis of said estimated phase and of said further estimated phase.

13. Localisation system according to any one of claims 10 to 12, **characterised in that** it comprises a transmitting device (2; 2a) and a plurality of receiving devices (3; 3a; 3b) arranged in positions that are different from one another, said plurality of receiving devices (3; 3a; 3b) comprises three receiving devices (3; 3a; 3b), or a number of receiving devices (3; 3a; 3b) that is greater than three.

**Patentansprüche**

1. Verfahren zum Schätzen eines Abstandes (d) einer Übertragungsvorrichtung (2; 2a) von wenigstens einer Empfangsvorrichtung (3; 3a; 3b) mit den folgenden Schritten:

- Erzeugen eines ersten sinusförmigen Signals mit einer ersten Frequenz f1 mittels der Übertragungsvorrichtung (2; 2a);
- Erzeugen eines zweiten sinusförmigen Signals mit einer zweiten Frequenz f2, das mit dem ersten sinusförmigen Signal synchron ist, unter Verwendung der Übertragungsvorrichtung (2; 2a);
- Übertragen des ersten sinusförmigen Signals und des zweiten sinusförmigen Signals zu der wenigstens einen Empfangsvorrichtung (3, 3a, 3b);
- Schätzen der Phase des von der Empfangsvorrichtung (3; 3a; 3b) erhaltenen ersten sinusförmigen Signals und des zweiten sinusförmigen Signals;
- Schätzen des Abstandes (d) auf der Basis der Schätzung der Phase des ersten sinusförmigen Signals und des zweiten sinusförmigen Signals;

**dadurch gekennzeichnet, dass** die erste Frequenz f1 und die zweite Frequenz f2 auf eine solche Weise ausgewählt werden, dass die Übertragungsvorrichtung und die wenigstens eine Empfangsvorrichtung in der Nahfeld-Übertragungszone arbeiten.

2. Verfahren nach Anspruch 1, bei dem die zweite Frequenz f2 ein Vielfaches oder ein Teiler der ersten Frequenz f1 ist, und wobei die beiden Signale miteinander synchron sind.

3. Verfahren nach Anspruch 1 oder 2, bei dem das erste sinusförmige Signal und das zweite sinusförmige Signal miteinander auf eine solche Weise addiert werden, dass ein kombiniertes Signal erhalten wird, das zu der Empfangsvorrichtung (3; 3a; 3b) übertragen wird, wobei das von der Empfangsvorrichtung (3; 3a; 3b) empfangene kombinierte Signal optional in eine digitale Form konvertiert wird.

4. Verfahren nach Anspruch 3, bei dem das von der Empfangsvorrichtung (3; 3a; 3b) empfangene kombinierte Signal vor dem Schätzen der Phase gefiltert wird, um das erste sinusförmige Signal und das zweite sinusförmige Signal zu trennen und um die Intensität des verbleibenden thermischen Rauschens zu reduzieren.

5. Verfahren nach irgendeinem vorhergehenden Anspruch, bei dem die wenigstens eine Empfangsvorrichtung (3; 3a; 3b) eine Mehrzahl von Empfangsvorrichtungen (3; 3a; 3b) aufweist, die an unterschiedlichen und bekannten Positionen angeordnet sind.

6. Verfahren nach Anspruch 5, bei dem das Schätzen des Abstandes das Schätzen der entsprechenden Abstände (d1; d2; d3) der Übertragungsvorrichtung (2; 2a; 2b) von der Empfangsvorrichtung (3; 3a; 3b) umfasst.

7. Verfahren nach Anspruch 6, ferner umfassend das Schätzen der Position der Übertragungsvorrichtung (2) in Bezug auf die Empfangsvorrichtungen (3; 3a; 3b) auf der Basis der betreffenden Abstände (d1; d2; d3).

8. Verfahren nach irgendeinem der Ansprüche 5 bis 7, bei dem die Mehrzahl von Empfangsvorrichtungen (3; 3a; 3b) wenigstens drei Empfangsvorrichtungen (3; 3a; 3b) oder eine Anzahl von Empfangsvorrichtungen (3; 3a; 3b) umfasst, die größer als drei ist.

9. Verfahren nach Anspruch 8, ferner umfassend das Schätzen der Position und der Orientierung der Übertragungsvorrichtung (2; 2a) in Bezug auf die Empfangsvorrichtungen (3; 3a; 3b) auf der Basis der betreffenden Phasenmessungen der zwei sinusförmigen Signale, die von der Übertragungsvorrichtung (2; 2a) und von den Empfangsvorrichtungen (3; 3a; 3b) ausgehen und zu den Positionen der Empfangsvorrichtungen (3; 3a; 3b) gelangen.

10. System zum Schätzen des Abstands, mit einer Übertragungsvorrichtung (2) und wenigstens einer Empfangsvorrichtung (3), wobei das System dazu ausgebildet ist, einen Abstand (d) der Übertragungsvorrichtung (2) von der wenigstens einen Empfangsvorrichtung (3) zu schätzen, wobei die Übertragungsvorrichtung (2) Folgendes aufweist:

- einen ersten Sinus-Oszillator (4), der dazu ausgebildet ist, ein erstes sinusförmiges Signal mit einer ersten Frequenz f1 zu erzeugen;
- einen zweiten Sinus-Oszillator (5), der dazu ausgebildet ist, ein zweites sinusförmiges Signal zu erzeugen, das synchron mit dem ersten sinusförmigen Signal ist und eine zweite Frequenz f2 aufweist;
- eine Additionsvorrichtung (15), die dazu ausgebildet ist, das erste sinusförmige Signal und das zweite sinusförmige Signal zu addieren, um ein kombiniertes Signal zu erhalten, das die Summe des ersten sinusförmigen Signals und des zweiten sinusförmigen Signals darstellt;
- einen Verstärker (6), der dazu ausgebildet ist, das kombinierte Signal zu verstärken;
- eine Übertragungsantenne (7), die dazu ausgebildet ist, das kombinierte verstärkte Signal zu übertragen,

wobei die Übertragungsvorrichtung Folgendes aufweist:

- eine Empfangsantenne (8), die dazu ausgebildet ist, das von der Übertragungsantenne (7) übertragene kombinierte verstärkte Signal zu empfangen;
- einen rauscharmen Verstärker (9), der dazu ausgebildet ist, das von der Empfangsantenne (8) erhaltene Signal zu verstärken;

**dadurch gekennzeichnet, dass** die Empfangsvorrichtung ferner Folgendes aufweist:

- ein erstes Bandpass-Filter (10), das dazu ausgebildet ist, eine erste Komponente mit einer ersten Frequenz f1 des von der Empfangsantenne (8) erhaltenen Signals zu filtern;

- ein zweites Bandpass-Filter (11), das dazu ausgebildet ist, eine zweite Komponente mit einer zweiten Frequenz f2 aus dem von der Empfangsantenne (8) erhaltenen Signal zu filtern;
- eine erste Phasenschätzeinrichtung (12), die dazu ausgebildet ist, eine Phase der ersten Komponente mit einer Frequenz f1 zu schätzen;
- eine zweite Phasenschätzeinrichtung (13), die dazu ausgebildet ist, eine weitere Phase der zweiten Komponente mit einer Frequenz f2 zu schätzen;
- eine Verarbeitungsvorrichtung (14), die dazu ausgebildet ist, den Abstand (d) auf der Basis der geschätzten Phase und der zusätzlich geschätzten Phase auszuwerten,

wobei die erste Frequenz f1 und die zweite Frequenz f2 auf eine solche Weise ausgewählt werden, dass die Übertragungsvorrichtung und die wenigstens eine Empfangsvorrichtung in der Nahfeld-Ausbreitungszone arbeiten.

11. System zum Schätzen des Abstands, mit einer Übertragungsvorrichtung (2) und wenigstens einer Empfangsvorrichtung (3b), wobei das System dazu ausgebildet ist, einen Abstand (d) der Übertragungsvorrichtung (2) von der wenigstens einen Empfangsvorrichtung (3b) zu schätzen, wobei die Übertragungsvorrichtung (2) Folgendes aufweist:

- einen ersten Sinus-Oszillator (4), der dazu ausgebildet ist, ein erstes sinusförmiges Signal mit einer ersten Frequenz f1 zu erzeugen;
- einen zweiten Sinus-Oszillator (5), der dazu ausgebildet ist, ein zweites sinusförmiges Signal zu erzeugen, das synchron mit dem ersten sinusförmigen Signal ist und eine zweite Frequenz f2 aufweist;
- eine Additionsvorrichtung (15), die dazu ausgebildet ist, das erste sinusförmige Signal und das zweite sinusförmige Signal zu addieren, um ein kombiniertes Signal zu erhalten, das die Summe des ersten sinusförmigen Signals und des zweiten sinusförmigen Signals darstellt;
- einen Verstärker (6), der dazu ausgebildet ist, das kombinierte Signal zu verstärken;
- eine Übertragungsantenne (7), die dazu ausgebildet ist, das kombinierte verstärkte Signal zu übertragen;
- wobei die Empfangsvorrichtung (3b) Folgendes aufweist:
- eine Empfangsantenne (8), die dazu ausgebildet ist, das kombinierte verstärkte Signal, das von der Übertragungsantenne (7) übertragen wird, zu empfangen;
- einen rauscharmen Verstärker (9), der dazu ausgebildet ist, das von der Empfangsantenne (8) erhaltene Signal zu verstärken;

**dadurch gekennzeichnet, dass** die Empfangsvorrichtung ferner Folgendes aufweist:

- einen Analog/Digital-Konverter (38), der dazu ausgebildet ist, das von der Empfangsantenne (8) erhaltene und von dem Verstärker (9) verstärkte Signal in eine digitale Form zu konvertieren;
- eine digitale Verarbeitungsvorrichtung (39), die dazu ausgebildet ist, das von der Empfangsantenne (8) erhaltene und von dem Verstärker (9) verstärkte Signal zu verarbeiten, um die Signalfiltervorgänge, die Phasenschätzung und die Abstandsschätzung der Übertragungsvorrichtung (2) in Bezug auf die Empfangsvorrichtung (3b) zu realisieren, wobei die erste Frequenz f1 und die zweite Frequenz f2 auf eine solche Weise ausgewählt werden, dass die Übertragungsvorrichtung und die wenigstens eine Empfangsvorrichtung in der Nahfeld-Ausbreitungszone arbeiten.

12. Lokalisierungssystem mit einer Übertragungsvorrichtung (2a) und wenigstens einer Empfangsvorrichtung (3a), wobei das System dazu ausgebildet ist, einen Abstand (d) der Übertragungsvorrichtung (2a) von der wenigstens einen Empfangsvorrichtung (3a) zu schätzen, **dadurch gekennzeichnet, dass** die Übertragungsvorrichtung (2a) Folgendes aufweist:

- einen Sinus-Oszillator (21), der dazu ausgebildet ist, ein erstes sinusförmiges Signal mit einer ersten Frequenz f1 zu erzeugen;
- einen Frequenzteiler oder Multiplizierer (22), der mit dem Sinus-Oszillator (21) verbunden ist und der dazu ausgebildet ist, ein zweites sinusförmiges Signal mit einer Frequenz f2 zu erzeugen, die gleich der Frequenz f1 ist, ein Teiler davon oder ein Vielfaches davon;
- einen ersten Verstärker (23), der dazu ausgebildet ist, das erste sinusförmige Signal mit einer Frequenz f1 zu verstärken;
- einen zweiten Verstärker (24), der dazu ausgebildet ist, das zweite sinusförmige Signal mit einer Frequenz f2 zu verstärken,
- einen ersten Resonanzkreis (25) LC, der bei der ersten Frequenz f1 arbeitet, der dazu ausgebildet ist, das erste sinusförmige Signal zu übertragen;

- einen zweiten Resonanzkreis (26) LC, der bei der zweiten Frequenz f2 arbeitet, der dazu ausgebildet ist, das zweite sinusförmige Signal zu übertragen, **dadurch gekennzeichnet, dass** die erste Frequenz f1 und die zweite Frequenz f2 auf eine solche Weise ausgewählt werden, dass die Übertragungsvorrichtung und die wenigstens eine Empfangsvorrichtung in der Nahfeldübertragungszone arbeiten,

und dass die Empfangsvorrichtung (3a) Folgendes aufweist:

- einen dritten Resonanzkreis (31) LC, der bei der ersten Frequenz f1 arbeitet und der dazu ausgebildet ist, das erste sinusförmige Signal zu erhalten;
- einen vierten Resonanzkreis (32) LC, der bei der zweiten Frequenz f2 arbeitet, der dazu ausgebildet ist, das zweite sinusförmige Signal zu erhalten;
- einen ersten rauscharmen Verstärker (33), der dazu ausgebildet ist, das erste sinusförmige Signal zu verstärken;
- einen zweiten rauscharmen Verstärker (34), der dazu ausgebildet ist, das zweite sinusförmige Signal zu verstärken;
- eine erste Phasenschätzeinrichtung (35), die dazu ausgebildet ist, eine Phase des ersten sinusförmigen Signals zu schätzen;
- eine zweite Phasenschätzeinrichtung (36), die dazu ausgebildet ist, eine weitere Phase des zweiten sinusförmigen Signals zu schätzen;
- eine Verarbeitungsvorrichtung (37), die dazu ausgebildet ist, den Abstand (d) auf der Basis der geschätzten Phase und der weiteren geschätzten Phase zu schätzen.

13. Lokalisierungssystem nach irgendeinem der Ansprüche 10 bis 12, **dadurch gekennzeichnet, dass** es eine Übertragungsvorrichtung (2; 2a) sowie eine Mehrzahl von Empfangsvorrichtungen (3; 3a; 3b) aufweist, die an Positionen angeordnet sind, die voneinander verschieden sind, wobei die Mehrzahl von Empfangsvorrichtungen (3; 3a; 3b) drei Empfangsvorrichtungen (3; 3a; 3b) oder eine Anzahl von Empfangsvorrichtungen (3; 3a; 3b) aufweist, die größer als drei ist.

## Revendications

1. Procédé pour estimer une distance (d) d'un dispositif de transmission (2 ; 2a) à partir d'au moins un dispositif de réception (3 ; 3a ; 3b) comprenant les étapes suivantes :

   - la génération, avec ledit dispositif de transmission (2 ; 2a), d'un premier signal sinusoïdal possédant une première fréquence f1 ;
   - la génération, avec ledit dispositif de transmission (2 ; 2a), d'un second signal sinusoïdal possédant une seconde fréquence f2, qui est synchrone avec ledit premier signal sinusoïdal ;
   - la transmission dudit premier signal sinusoïdal et dudit second signal sinusoïdal audit au moins un dispositif de réception (3, 3a, 3b) ;
   - l'estimation de la phase dudit premier signal sinusoïdal et dudit second signal sinusoïdal reçus à partir dudit dispositif de réception (3 ; 3a ; 3b) ;
   - l'estimation de ladite distance (d) sur la base de ladite estimation de la phase dudit premier signal sinusoïdal et dudit second signal sinusoïdal,

   **caractérisé en ce que** ladite première fréquence f1 et ladite seconde fréquence f2 sont choisies de manière telle que ledit dispositif de transmission et ledit au moins un dispositif de réception fonctionnent dans la zone de propagation en champ proche.

2. Procédé selon la revendication 1, dans lequel ladite seconde fréquence f2 est un multiple ou un sous-multiple de ladite première fréquence f1, ou dans lequel les deux signaux sont synchrones l'un avec l'autre.

3. Procédé selon la revendication 1 ou 2, dans lequel ledit premier signal sinusoïdal et ledit second signal sinusoïdal sont additionnés ensemble de manière telle à obtenir un signal combiné qui est transmis audit dispositif de réception (3 ; 3a ; 3b), ledit signal combiné reçu à partir dudit dispositif de réception (3 ; 3a ; 3b) étant optionnellement converti en format numérique.

**4.** Procédé selon la revendication 3, dans lequel, avant d'estimer ladite phase, ledit signal combiné reçu à partir dudit dispositif de réception (3 ; 3a ; 3b) est filtré pour séparer ledit premier signal sinusoïdal et ledit second signal sinusoïdal et réduire l'intensité du bruit thermique résiduel.

**5.** Procédé selon une quelconque revendication précédente, dans lequel ledit au moins un dispositif de réception (3 ; 3a ; 3b) comprend une pluralité de dispositifs de réception (3 ; 3a ; 3b) agencés dans des positions différentes et connues.

**6.** Procédé selon la revendication 5, dans lequel ladite estimation de ladite distance comprend l'estimation des distances respectives (d1 ; d2 ; d3) dudit dispositif de transmission (2 ; 2a ; 2b) à partir desdits dispositifs de réception (3 ; 3a ; 3b).

**7.** Procédé selon la revendication 6, comprenant en outre l'estimation de la position dudit dispositif de transmission (2) par rapport auxdits dispositifs de réception (3 ; 3a ; 3b) sur la base desdites distances respectives (d1 ; d2 ; d3).

**8.** Procédé selon l'une quelconque des revendications 5 à 7, dans lequel ladite pluralité de dispositifs de réception (3 ; 3a ; 3b) comprend au moins trois dispositifs de réception (3 ; 3a ; 3b), ou un nombre de dispositifs de réception (3 ; 3a ; 3b) supérieur à trois.

**9.** Procédé selon la revendication 8, comprenant en outre l'estimation de la position et de l'orientation dudit dispositif de transmission (2 ; 2a) par rapport auxdits dispositifs de réception (3 ; 3a ; 3b) sur la base des mesures de phase respectives des deux signaux sinusoïdaux provenant dudit dispositif de transmission (2 ; 2a) à partir desdits dispositifs de réception (3 ; 3a ; 3b) et aux positions desdits dispositifs de réception (3 ; 3a ; 3b).

**10.** Système d'estimation de distance, comprenant un dispositif de transmission (2) et au moins un dispositif de réception (3), ledit système étant adapté pour estimer une distance (d) dudit dispositif de transmission (2) à partir dudit au moins un dispositif de réception (3), dans lequel ledit dispositif de transmission (2) comprend :

- un premier oscillateur sinusoïdal (4) qui est adapté pour générer un premier signal sinusoïdal possédant une première fréquence f1 ;
- un second oscillateur sinusoïdal (5) qui est adapté pour générer un second signal sinusoïdal, qui est synchrone avec ledit premier signal sinusoïdal, possédant une seconde fréquence f2 ;
- un dispositif d'addition (15) qui est adapté pour additionner ledit premier signal sinusoïdal et ledit second signal sinusoïdal pour obtenir un signal combiné qui est l'addition dudit premier signal sinusoïdal et dudit second signal sinusoïdal ;
- un amplificateur (6) qui est adapté pour amplifier ledit signal combiné ;
- une antenne de transmission (7) qui est adaptée pour transmettre ledit signal combiné amplifié,

dans lequel ledit dispositif de réception comprend :

- une antenne de réception (8) qui est adaptée pour recevoir ledit signal combiné amplifié émis par ladite antenne de transmission (7) ;
- un amplificateur à faible bruit (9) qui est adapté pour amplifier le signal reçu par ladite antenne de réception (8) ;

**caractérisé en ce que** ledit dispositif de réception comprend en outre :

- un premier filtre passe-bande (10) qui est adapté pour filtrer une première composante possédant une fréquence f1 dudit signal reçu par ladite antenne de réception (8) ;
- un second filtre passe-bande (11) qui est adapté pour filtrer une seconde composante possédant une fréquence f2 dudit signal reçu par ladite antenne de réception (8) ;
- un premier estimateur de phase (12) qui est adapté pour estimer une phase de ladite première composante possédant une fréquence f1 ;
- un second estimateur de phase (13) qui est adapté pour estimer une phase supplémentaire de ladite seconde composante possédant une fréquence f2 ;
- un dispositif de traitement (14) qui est adapté pour évaluer ladite distance (d) sur la base de ladite phase estimée et de ladite phase estimée supplémentaire,

ladite première fréquence f1 et ladite seconde fréquence f2 étant choisies de manière telle que ledit dispositif de transmission et ledit au moins un dispositif de réception fonctionnent dans la zone de propagation en champ proche.

11. Système d'estimation de distance comprenant un dispositif de transmission (2) et au moins un dispositif de réception (3b), ledit système étant adapté pour estimer une distance (d) dudit dispositif de transmission (2) à partir dudit au moins un dispositif de réception (3b), dans lequel ledit dispositif de transmission (2) comprend :

- un premier oscillateur sinusoïdal (4) qui est adapté pour générer un premier signal sinusoïdal possédant une première fréquence f1 ;
- un second oscillateur sinusoïdal (5) qui est adapté pour générer un second signal sinusoïdal, qui est synchrone avec ledit premier signal sinusoïdal, possédant une seconde fréquence f2 ;
- un dispositif d'addition (15) qui est adapté pour additionner ledit premier signal sinusoïdal et ledit second signal sinusoïdal pour obtenir un signal combiné qui est l'addition dudit premier signal sinusoïdal et dudit second signal sinusoïdal ;
- un amplificateur (6) qui est adapté pour amplifier ledit signal combiné ;
- une antenne de transmission (7) qui est adaptée pour émettre ledit signal combiné amplifié,

dans lequel ledit dispositif de réception (3b) comprend :

- une antenne de réception (8) qui est adaptée pour recevoir ledit signal combiné amplifié émis par ladite antenne de transmission (7) ;
- un amplificateur à faible bruit (9) qui est adapté pour amplifier le signal reçu par ladite antenne de réception (8) ;

**caractérisé en ce que** ledit dispositif de réception comprend en outre :

- un convertisseur analogique-numérique (38) qui est adapté pour convertir en un format numérique ledit signal reçu par ladite antenne de réception (8) et amplifié par ledit amplificateur (9) ;
- un dispositif de traitement numérique (39) qui est adapté pour traiter ledit signal reçu par ladite antenne de réception (8) et amplifié par ledit amplificateur (9) réalisant les opérations de filtrage de signal, l'estimation de phase et l'estimation de distance du dispositif de transmission (2) par rapport au dispositif de réception (3b), ladite première fréquence f1 et ladite seconde fréquence f2 étant choisies de manière telle que ledit dispositif de transmission et ledit au moins un dispositif de réception fonctionnent dans la zone de propagation en champ proche.

12. Système de localisation, comprenant un dispositif de transmission (2a) et au moins un dispositif de réception (3a), ledit système étant adapté pour estimer une distance (d) dudit dispositif de transmission (2a) à partir dudit au moins un dispositif de réception (3a), **caractérisé en ce que** ledit dispositif de transmission (2a) comprend :

- un oscillateur sinusoïdal (21) qui est adapté pour générer un premier signal sinusoïdal possédant une fréquence f1 ;
- un diviseur ou multiplicateur de fréquence (22), connecté audit oscillateur sinusoïdal (21) et qui est adapté pour générer un second signal sinusoïdal possédant une fréquence f2 égale à un sous-multiple, ou à un multiple, de ladite fréquence f1 ;
- un premier amplificateur (23) qui est adapté pour amplifier ledit premier signal sinusoïdal possédant une fréquence f1 ;
- un second amplificateur (24) qui est adapté pour amplifier ledit second signal sinusoïdal possédant une fréquence f2 ;
- un premier circuit résonant (25) LC qui fonctionne à ladite première fréquence f1, qui est adapté pour émettre ledit premier signal sinusoïdal ;
- un deuxième circuit résonant (26) LC qui fonctionne à ladite seconde fréquence f2, qui est adapté pour émettre ledit second signal sinusoïdal, **caractérisé en ce que** ladite première fréquence f1 et ladite seconde fréquence f2 sont choisies de manière telle que ledit dispositif de transmission et ledit au moins un dispositif de réception fonctionnent dans la zone de propagation en champ proche,

et **en ce que** ledit dispositif de réception (3a) comprend :

- un troisième circuit résonant (31) LC qui fonctionne à ladite première fréquence f1, qui est adapté pour recevoir ledit premier signal sinusoïdal ;
- un quatrième circuit résonant (32) LC qui fonctionne à ladite seconde fréquence f2, qui est adapté pour recevoir ledit second signal sinusoïdal ;
- un premier amplificateur à faible bruit (33) adapté pour amplifier ledit premier signal sinusoïdal ;
- un second amplificateur à faible bruit (34) adapté pour amplifier ledit second signal sinusoïdal ;
- un premier estimateur de phase (35) qui est adapté pour estimer une phase dudit premier signal sinusoïdal ;
- un second estimateur de phase (36) qui est adapté pour estimer une phase supplémentaire dudit second signal sinusoïdal ;
- un dispositif de traitement (37) qui est adapté pour estimer ladite distance (d) sur la base de ladite phase estimée et de ladite phase estimée supplémentaire.

13. Système de localisation, selon l'une quelconque des revendications 10 à 12, **caractérisé en ce qu'**il comprend un dispositif de transmission (2 ; 2a) et une pluralité de dispositifs de réception (3 ; 3a ; 3b) agencés dans des positions qui sont différentes les unes des autres, ladite pluralité de dispositifs de réception (3 ; 3a ; 3b) comprend trois dispositifs de réception (3 ; 3a ; 3b), ou un nombre de dispositifs de réception (3 ; 3a ; 3b) qui est supérieur à trois.

Fig. 1

Fig. 2

$\psi(d, \Theta = 0)$

Fig. 3

Fig. 4

Fig. 5

EP 2 815 249 B1

Fig. 6

EP 2 815 249 B1

## REFERENCES CITED IN THE DESCRIPTION

**Patent documents cited in the description**

- US 6963301 B
- US 20090280742 A
- US 7307595 B
- US 7298314 B
- US 7592949 B
- US 7859452 B
- US 7414571 B
- US 7957833 B
- US 7304609 B
- US 7228228 B

**Non-patent literature cited in the description**

- **CHEE WEE KIM ; F. P. S. CHIN ; H. K. GARG.** Selection of Frequency for Near Field Electromagnetic Ranging (NFER) Based on its Cramer-Rao Bound. *IEEE SIGNAL PROCESSING LETTERS,* December 2007, vol. 14 (12
- **C.W. KIM ; F.P.S. CHIN ; H.K. GARG.** Multiple Frequencies For Accuracy Improvement In Near Field Electromagnetic Ranging (NFER). *The 17th Annual IEEE International Symposium on Personal, Indoor and Mobile Radio Communications*